# EUROPÄISCHE PATENTSCHRIFT

(11) **EP 3 888 814 B1**
(45) Veröffentlichungstag und Bekanntmachung des Hinweises auf die Patenterteilung: **04.10.2023**
(21) Anmeldenummer: 21165806.7
(22) Anmeldetag: 30.03.2021
(51) Int. Cl.: B21J 5/00, B21J 5/02, B21J 5/12, B21K 1/74, B23P 15/00, B60G 13/00

(54) **SCHMIEDEVERFAHREN, INSBESONDERE LEICHTBAULEGIERUNGSSCHMIEDEVERFAHREN**
FORGING PROCESS, IN PARTICULAR LIGHTWEIGHT ALLOY FORGING PROCESS
PROCÉDÉ DE FORGEAGE, EN PARTICULIER PROCÉDÉ DE FORGEAGE D'ALLIAGES LÉGERS

(30) Priorität: 01.04.2020 DE 102020109098
(43) Veröffentlichungstag der Anmeldung: 06.10.2021
(73) Patentinhaber: Leiber Group GmbH & Co. KG, 78576 Emmingen (DE)
(72) Erfinder: LEIBER, Rolf, 78576 Emmingen-Liptingen (DE); KRONER, Andreas, 78244 Gottmadingen (DE)
(74) Vertreter: Daub, Thomas

(56) Entgegenhaltungen:
- EP-A1- 0 112 566
- EP-A1- 1 152 910
- EP-A1- 3 409 401
- DE-A1-102016 123 364
- DE-A1-102016 224 024
- DE-T5-112008 003 015
- JP-A- 2015 066 572
- US-A- 2 609 861
- US-A- 4 274 277

## Beschreibung

### Stand der Technik

Die Erfindung betrifft ein Schmiedeverfahren, insbesondere ein Leichtbaulegierungsschmiedeverfahren, nach dem Oberbegriff des Anspruchs 1.

Aus DE 10 2012 005 863 A1 ist bereits ein Schmiedeverfahren, insbesondere ein Leichtbaulegierungsschmiedeverfahren, und zumindest ein mittels des Schmiedeverfahrens hergestelltes Schmiedebauteil bekannt, wobei bei dem bereits bekannten Schmiedeverfahren in zumindest einem Verfahrensschritt, insbesondere in einem Schmiedeumformschritt, das Schmiedebauteil in einem Schmiedewerkzeug, insbesondere in einem Gesenk, umgeformt wird.

Ferner ist aus JP H06 - 101738 A bereits ein Schmiedeverfahren bekannt, bei dem in zumindest einem Schmiedeumformschritt ein als Federbeingabel ausgebildetes Schmiedebauteil in einem Schmiedewerkzeug umgeformt wird, wobei in zumindest einem Verfahrensschritt nach einer Schmiedeumformung eine Biegeumformung des Schmiedebauteils erfolgt. Aus der JP H06 - 101738 A ist zudem ein Schmiedebauteil bekannt, das mittels des in der JP H06 - 101738 A offenbarten Schmiedeverfahrens hergestellt ist, wobei das Schmiedebauteil als Federbeingabel ausgebildet ist, die einen als Dämpferrohraufnahme ausgebildeten Teilbereich, einen Tragbereich und einen weiteren Tragbereich umfasst, wobei der Tragbereich und der weitere Tragbereich Gabelarme der Federbeingabel bilden, wobei die Gabelarme durch die Biegeumformung hergestellt sind. Eine Biegeachse, um die die Biegeumformung des in der JP H06 - 101738 A offenbarten Schmiedeverfahrens erfolgt, verläuft zumindest im Wesentlichen senkrecht zu Längsachsen der Gabelarme des als Federbeingabel ausgebildeten Schmiedebauteils.

Ferner sind aus EP 0 112 566 A1, US 4 274 277 A und US 2 609 861 A bereits Schmiedeverfahren bekannt, bei denen in zumindest einem Schmiedeumformschritt ein Schmiedebauteil in einem Schmiedewerkzeug geformt wird, wobei in zumindest einem Verfahrensschritt Gabelarme des Schmiedebauteils geformt werden, wobei in zumindest einem Verfahrensschritt nach einer Schmiedeumformung eine Biegeumformung des Schmiedebauteils erfolgt, wobei die Biegeumformung des Schmiedebauteils um eine Biegeachse des Schmiedebauteils erfolgt, die zumindest im Wesentlichen parallel zu Längsachsen der Gabelarme des Schmiedebauteils verläuft. Aus der EP 0 112 566 A1, US 4 274 277 A und US 2 609 861 A sind auch bereits mittels des jeweiligen Schmiedeverfahrens hergestellte Schmiedebauteile bekannt.

Des Weiteren ist aus DE 11 2008 003 015 T5 ein Press- und Stanzverfahren bekannt, wobei in zumindest einem Umformschritt ein Bauteil in einer Presse kaltumgeformt wird. In dem Umformschritt werden Gabelarme des als Federbeingabel ausgebildeten Bauteils geformt. In zumindest einem Verfahrensschritt nach der Umformung erfolgt eine Biegeumformung des Bauteils. Die Biegeumformung des Bauteils erfolgt um eine Biegeachse des Bauteils, die zumindest im Wesentlichen parallel zu Längsachsen der Gabelarme des als Federbeingabel ausgebildeten Bauteils verläuft.

Zudem ist aus der gattungsgemäßen DE 10 2016 123 364 A1 bereits ein Schmiedeverfahren zur Herstellung eines als Federbeingabel ausgebildeten Schmiedebauteils sowie das als Federbeingabel ausgebildete Schmiedebauteil selbst bekannt. Das aus der DE 10 2016 123 364 A1 bekannte und als Federbeingabel ausgebildete Schmiedebauteil umfasst einen als Dämpferrohraufnahme ausgebildeten Teilbereich, einen Tragbereich und einen weiteren Tragbereich, wobei der Tragbereich und der weitere Tragbereich Gabelarme der Federbeingabel bilden.

Die Aufgabe der Erfindung besteht insbesondere darin, ein gattungsgemäßes Verfahren mit verbesserten Eigenschaften hinsichtlich einer Herstellungsmöglichkeit von komplexen Bauteilgeometrien bei Schmiedebauteilen, die insbesondere mit einem geringen Nachbearbeitungsaufwand einsatzbereit sind, und ein gattungsgemäßes Schmiedebauteil mit verbesserten Eigenschaften hinsichtlich eines Gesamtgewichts, einer hohen Belastbarkeit und mit wenig nachzubearbeitenden Bereichen bereitzustellen. Die Aufgabe wird erfindungsgemäß durch die Merkmale des Anspruchs 1 und/oder des Anspruchs 8 gelöst, während vorteilhafte Ausgestaltungen und Weiterbildungen der Erfindung den Unteransprüchen entnommen werden können.

### Vorteile der Erfindung

Die Erfindung geht aus von einem Schmiedeverfahren, insbesondere von einem Leichtbaulegierungsschmiedeverfahren, wobei in zumindest einem Schmiedeumformschritt ein Schmiedebauteil in einem Schmiedewerkzeug, insbesondere in einem Gesenk, warmumgeformt wird, wobei in dem Schmiedeumformschritt Gabelarme des als Federbeingabel ausgebildeten Schmiedebauteils geschmiedet werden, wobei in zumindest einem Verfahrensschritt nach einer Schmiedeumformung eine Biegeumformung des Schmiedebauteils, insbesondere eine Biegeumformung um mehr als 60° zumindest eines Teilbereichs des Schmiedebauteils, erfolgt, wobei die Biegeumformung des Schmiedebauteils um eine Biegeachse des Schmiedebauteils erfolgt, die zumindest im Wesentlichen parallel zu Längsachsen von Gabelarmen des als Federbeingabel ausgebildeten Schmiedebauteils verläuft, wobei in dem Schmiedeumformschritt in die Gabelarme eine bionische oder eine fachwerkartige Struktur eingebracht wird. Bevorzugt ist das Schmiedeverfahren zu einer Herstellung von Leichtbaulegierungsbauteilen für den Automobil-, Luftfahrt- und/oder Industriebereich vorgesehen. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist/sind, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Vorzugsweise ist die Biegeumformung verschieden von einer in einem Gesenk durchgeführte Warmumformung des Schmiedebauteils. Insbesondere erfolgt die Biegeumformung des Schmiedebauteils nach einer Warmumformung des Schmiedebauteils in einem Gesenk. Bevorzugt erfolgt die Biegeumformung des Schmiedebauteils außerhalb des Gesenks, in dem das Schmiedebauteil, insbesondere während der Schmiedeumformung, warmumgeformt wird. Es ist jedoch auch denkbar, dass das Gesenk, in dem das Schmiedebauteil warmumgeformt wird, mehrteilig ausgebildet ist, insbesondere mehrere miteinander beweglich verbundene Teilbereiche aufweist, und bewegliche Teilbereiche des Gesenks, insbesondere nach einer Warmumformung des Schmiedebauteils im Gesenk, zu einer Biegeumformung des Schmiedebauteils relativ zueinander, insbesondere um eine Biegeachse, bewegt werden, um die Biegeumformung des Schmiedebauteils durchzuführen.

Bevorzugt erfolgt die Biegeumformung des Schmiedebauteils um eine Biegeachse des Schmiedebauteils. Die Biegeachse des Schmiedebauteils verläuft bevorzugt zumindest im Wesentlichen parallel zu einer Längsachse des Schmiedebauteils, insbesondere zu Längsachsen von Gabelarmen des als Federbeingabel ausgebildeten Schmiedebauteils. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt verläuft die Biegeachse zumindest im Wesentlichen parallel zu einer Längsachse eines als Dämpferrohraufnahme ausgebildeten Teilbereichs des als Federbeingabel ausgebildeten Schmiedebauteils. Es ist jedoch auch denkbar, dass eine zusätzliche Biegeumformung des Schmiedebauteils um eine andere, einem Fachmann als sinnvoll erscheinende Achse des Schmiedebauteils erfolgt, wie beispielsweise um eine Querachse, die quer, insbesondere zumindest im Wesentlichen senkrecht, zur Längsachse des Schmiedebauteils verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Erfindungsgemäß erfolgt in zumindest einem Verfahrensschritt nach der Schmiedeumformung eine Biegeumformung insbesondere um mehr als 90°, bevorzugt um mehr als 120° und besonders bevorzugt um mehr als 160° zumindest eines Teilbereichs des Schmiedebauteils, insbesondere um die Biegeachse des Schmiedebauteils. Bevorzugt erfolgt in zumindest einem Verfahrensschritt nach der Schmiedeumformung eine Biegeumformung des Schmiedebauteils, insbesondere zumindest eines Teilbereichs des Schmiedebauteils, um 180° um die Biegeachse des Schmiedebauteils. Vorzugsweise werden mittels der Biegeumformung zwei vor der Biegeumformung voneinander abgewandte Enden des Schmiedebauteils und/oder zumindest im Wesentlichen in einer gemeinsamen Ebene angeordnete Tragbereiche des Schmiedebauteils, insbesondere Gabelarme des als Federbeingabel ausgebildeten Schmiedebauteils, aufeinander zu gebogen. Bevorzugt werden die Tragbereiche mittels der Biegeumformung derart gebogen, dass die Tragbereiche nach der Biegeumformung in zueinander zumindest im Wesentlichen parallelen Ebenen ausgerichtet sind. Erfindungsgemäß sind/ist der Tragbereich und/oder der weitere Tragbereich als Gabelarm/e des als Federbeingabel ausgebildeten Schmiedebauteils ausgebildet. Vorzugsweise wird das Schmiedebauteil in dem Schmiedeumformschritt derart warmumgeformt, dass das Schmiedebauteil im Bereich der Biegeachse eine geringe Materialstärke, wie beispielsweise eine filmscharnierartige Ausbildung im Bereich der Biegeachse, zumindest einen Durchbruch im Bereich der Biegeachse aufweist oder im Bereich der Biegeachse andere, einem Fachmann als sinnvoll erscheinende Ausgestaltungen aufweist, insbesondere um eine Biegeumformung mit einem geringen Kraftaufwand realisieren zu können. Es ist auch denkbar, dass in dem Schmiedeumformschritt, insbesondere mittels eines dünnen Verbindungsabschnitts verbundene, Gabelarme des als Federbeingabel ausgebildeten Schmiedebauteils, insbesondere ohne eine Dämpferrohraufnahme des als Federbeingabel ausgebildeten Schmiedebauteils, geschmiedet werden, eine Biegeumformung der geschmiedeten Gabelarme erfolgt und anschließend die Dämpferrohraufnahme des als Federbeingabel ausgebildeten Schmiedebauteils mit den Gabelarmen gefügt wird, insbesondere daran angeschweißt wird. Auch denkbar ist, dass zusätzliche Funktionselemente, wie beispielsweise Fahrwerksanbindungsbereiche des als Federbeingabel ausgebildeten Schmiedebauteils während eines Schmiedeumformschritts angeschmiedet werden oder nach einem Schmieden oder Lösungsglühen gefügt werden, insbesondere mittels Schweißens.

Bevorzugt ist das Schmiedeverfahren als Gesenkschmiedeverfahren, insbesondere nach DIN 8583, ausgebildet. Vorzugsweise ist das Schmiedeverfahren als Gesenkschmiedeverfahren mit vollständig umschlossenem Werkstück, insbesondere als Gesenkschmiedeverfahren mit vollständig umschlossenem Werkstück mit Grat, ausgebildet. Vorzugsweise umfasst das Schmiedeverfahren mehrere Verfahrensschritte, in denen das Schmiedebauteil bis zu einem Erhalt eines Schmiedeendmaßes des Schmiedebauteils umgeformt wird. Vorzugsweise ist das Schmiedeverfahren derart auf eine, einem Fachmann bereits bekannte Art und Weise ausgelegt, dass in zumindest einem Verfahrensschritt des Schmiedeverfahrens ein zumindest im Wesentlichen gesamter Werkstoffquerschnitt des Schmiedebauteils plastifiziert wird. Bevorzugt erfolgt durch das Schmiedeverfahren eine dreidimensionale Spannungsverteilung im Schmiedebauteil während einer Umformung eines Halbzeugs zum Schmiedebauteil. Vorzugsweise wird ein Halbzeug in Form eines Stranggussmaterials oder eines Strangpressmaterials zu einer Herstellung des Schmiedebauteils mittels des Schmiedeverfahrens genutzt. Bevorzugt ist das Schmiedeverfahren derart ausgestaltet, dass eine möglichst homogene Temperaturverteilung im Schmiedebauteil realisierbar ist, wie beispielsweise mittels eines, einem Fachmann bereits bekannten Schmiedewerkzeugs, das bevorzugt als Vorgesenk oder als Fertiggesenk ausgebildet ist, insbesondere um lokale Umformgrade im Schmiedebauteil gezielt auf eine, einem Fachmann bereits bekannte Art und Weise zu beeinflussen. Vorzugsweise erfolgt in zumindest einem Verfahrensschritt, insbesondere vor einer Biegeumformung des Schmiedebauteils in dem Schmiedewerkzeug, eine Warmumformung des Schmiedebauteils in dem Schmiedewerkzeug. Bevorzugt ist das Schmiedewerkzeug als Gesenk ausgebildet, wie beispielsweise als Vorgesenk, als Fertiggesenk oder als ein anderes, einem Fachmann als sinnvoll erscheinendes Gesenk. Bevorzugt wird ein Schmiedeumformschritt des Schmiedeverfahrens in einem oder in mehreren Vorgesenk/en durchgeführt und zumindest ein weiterer Schmiedeumformschritt des Schmiedeverfahrens wird in einem oder mehreren Fertiggesenk/en durchgeführt.

Bevorzugt erfolgt eine Umformung des Schmiedebauteils in dem, insbesondere als Gesenk ausgebildeten, Schmiedewerkzeug bei einer Umformtemperatur von insbesondere mehr als 300 °C, vorzugsweise mehr als 400 °C, besonders bevorzugt mehr als 490 °C und ganz besonders bevorzugt von weniger als 700 °C. Vorzugsweise erfolgt eine Umformung des Schmiedebauteils in dem, insbesondere als Gesenk ausgebildeten, Schmiedewerkzeug bei einer Umformtemperatur mit einem Wert aus einem Wertebereich von 500 °C bis 560 °C, insbesondere bei einer Herstellung des Schmiedebauteils aus einer Aluminiumlegierung aus der 6000er-Reihe (EN AW 6xxx). Bei einer Herstellung des Schmiedebauteils aus einem anderen, einem Fachmann als sinnvoll erscheinenden Werkstoff, insbesondere aus einer Aluminiumlegierung aus der 2000er-(EN AW 2xxx) oder aus der 7000er-Reihe (EN AW 7xxx), sind auch andere Wertebereiche für die Umformtemperatur, wie beispielsweise eine Umformtemperatur mit einem Wert aus einem Wertebereich von 420 °C bis 560 °C oder dergleichen. Ein Fachmann wird vorzugsweise in Abhängigkeit von dem für das Schmiedebauteil gewählten Werkstoff einen sinnvollen Temperaturbereich für die Umformtemperatur wählen. Vorzugsweise wird in zumindest einem Verfahrensschritt des Schmiedeverfahrens, insbesondere vor der Biegeumformung des Schmiedebauteils und/oder vor einem als Warmumformung ausgebildeten Verfahrensschritt des Schmiedeverfahrens, zumindest ein Halbzeug, das zum Schmieden des Schmiedebauteils genutzt wird, vorgewärmt, insbesondere bis auf eine Temperatur von mehr als 300 °C, vorzugsweise von mehr als 400 °C, besonders bevorzugt von mehr als 490 °C und ganz besonders bevorzugt von weniger als 700 °C. Vorzugsweise erfolgt eine Vorwärmung des Schmiedebauteils mittels einer, einem Fachmann bereits bekannten Vorrichtung, wie beispielsweise einem Ofen oder dergleichen.

Bevorzugt erfolgt in zumindest einem Verfahrensschritt, insbesondere vor der Biegeumformung des Schmiedebauteils in dem Schmiedewerkzeug und insbesondere nach einer Vorwärmung des Halbzeugs, eine Übergabe, insbesondere eine zumindest teilweise automatische Übergabe, des Halbzeugs zu einer Schmiedevorrichtung. Die Schmiedevorrichtung umfasst vorzugsweise zumindest das Schmiedewerkzeug, in dem das Schmiedebauteil warmumgeformt wird. Zusätzlich kann die Schmiedevorrichtung weitere Schmiedewerkzeuge zu einer Bearbeitung des Halbzeugs und/oder des Schmiedebauteils aufweisen, wie beispielsweise ein Schmiedewerkzeug zu einer Vorformung des Halbzeugs, ein Schmiedewerkzeug zu einem Entgraten und/oder Zuschneiden des Schmiedebauteils, ein Schmiedewerkzeug zu einem Kalibrieren des Schmiedebauteils und/oder weitere, einem Fachmann als sinnvoll erscheinende Schmiedewerkzeuge. Es ist jedoch auch denkbar, dass das Halbzeug oder das Schmiedebauteil während des Schmiedeverfahrens an unterschiedliche Schmiedevorrichtungen mit voneinander verschiedenen Schmiedewerkzeugen zu einer Vorbearbeitung, Bearbeitung und/oder Nachbearbeitung, wie beispielsweise ein Vorformen, ein Warmumformen, ein Zuschneiden, ein Abkühlen, ein Kalibrieren oder dergleichen, übergeben wird.

Bevorzugt erfolgt in zumindest einem Verfahrensschritt des Schmiedeverfahrens ein Warmauslagern des Schmiedebauteils, insbesondere nach einer Abkühlung des Schmiedebauteils in einem Schmiedewerkzeug, insbesondere zu einer Erreichung eines T1- bis T10-Zustand gemäß DIN-EN 515, bevorzugt eines T4-, T5-, T6- oder T7-Zustands gemäß DIN-EN 515. Vorzugsweise erfolgt eine Warmauslagerung des Schmiedebauteils bei einer Temperatur von insbesondere weniger als 280 °C, bevorzugt von weniger als 250 °C und besonders bevorzugt von weniger als 220 °C. Ganz besonders bevorzugt erfolgt eine Warmauslagerung des Schmiedebauteils bei einer Temperatur mit einem Wert aus einem Wertebereich von 120 °C bis 250 °C. Vorzugsweise erfolgt in zumindest einem Verfahrensschritt des Schmiedeverfahrens eine Schmiedebauteilübergabe, insbesondere eine zumindest teilweise automatische Schmiedebauteilübergabe, des Schmiedebauteils von der Schmiedevorrichtung an eine, einem Fachmann bereits bekannte Warmauslagerungsvorrichtung, insbesondere nach einer Biegeumformung des Schmiedebauteils in einem Schmiedewerkzeug. Bevorzugt erfolgt eine Schmiedebauteilübergabe des Schmiedebauteils von der Schmiedevorrichtung an eine, einem Fachmann bereits bekannte Warmauslagerungsvorrichtung bei einer Temperatur, die oberhalb, unterhalb oder entsprechend einer Warmauslagerungstemperatur des Schmiedebauteils liegt.

Mittels der erfindungsgemäßen Ausgestaltung des Schmiedeverfahrens können vorteilhaft Schmiedebauteile hergestellt werden, die eine komplexe Bauteilgeometrie aufweisen, wobei das Schmiedebauteil zumindest im Wesentlichen eine Endbauteilgeometrie aufweist. Es können vorteilhaft Schmiedebauteile mittels des Schmiedeverfahrens hergestellt werden, bei denen ein geringer Nachbearbeitungsaufwand bis zur Endbauteilgeometrie notwendig ist. Es kann ein vorteilhaft wirtschaftliches Schmiedeverfahren realisiert werden, mittels dessen komplexe und bis dato dem Schmieden schwer oder mit viel Nachbearbeitungsaufwand zugängliche Bauteile hergestellt werden können.

Des Weiteren wird vorgeschlagen, dass in zumindest einem Verfahrensschritt, insbesondere vor der Biegeumformung, vorzugsweise im Schmiedeumformschritt, eine Oberfläche des Schmiedebauteils zumindest in einem Teilbereich des Schmiedebauteils, insbesondere an einer Innenseite einer Dämpferrohraufnahme des als Federbeingabel ausgebildeten Schmiedebauteils, mit einer spezifischen Oberflächenstruktur versehen wird. Es ist denkbar, dass das Schmiedeverfahren zur Lösung der oben genannten Aufgabe in einer alternativen Ausgestaltung unabhängig von dem Verfahrensschritt der Biegeumformung ausgebildet ist. Vorzugsweise ist das Schmiedeverfahren in der alternativen Ausgestaltung, insbesondere in der unabhängig von dem Verfahrensschritt der Biegeumformung ausgeführten Ausgestaltung, derart ausgebildet, dass in zumindest einem Verfahrensschritt, insbesondere in einem Schmiedeumformschritt, ein Schmiedebauteil in einem Schmiedewerkzeug, insbesondere in einem Gesenk, umgeformt wird und in zumindest einem Verfahrensschritt, insbesondere im Schmiedeumformschritt, eine Oberfläche des Schmiedebauteils zumindest in einem Teilbereich des Schmiedebauteils, insbesondere an einer Innenseite einer Dämpferrohraufnahme des als Federbeingabel ausgebildeten Schmiedebauteils, mit einer spezifischen Oberflächenstruktur versehen wird. Unter "einer spezifischen Oberflächenstruktur" soll insbesondere eine Struktur einer Oberfläche verstanden werden, die, insbesondere makroskopische, Vertiefungen, Erhebungen und/oder Ausnehmungen aufweist. Die spezifische Oberflächenstruktur kann beispielsweise als Riffelung der Oberfläche, als Querrippen, als Längsrippen, als wabenartige Einprägung oder als eine andere, einem Fachmann als sinnvoll erscheinende spezifische Oberflächenstruktur ausgebildet sein. Bevorzugt wird im Schmiedeumformschritt eine Oberfläche des Schmiedebauteils zumindest in einem Teilbereich des Schmiedebauteils, insbesondere an der Innenseite der Dämpferrohraufnahme des als Federbeingabel ausgebildeten Schmiedebauteils, mit einer spezifischen Oberflächenstruktur versehen, wobei die spezifische Oberflächenstruktur als Riffelung der Oberfläche, als Rippen, als Wabenstruktur oder dergleichen ausgebildet ist. Vorzugsweise weist das Gesenk zumindest in einem Teilbereich des Gesenks, mittels dessen das Schmiedebauteil während der Schmiedeumformung warmumgeformt wird, eine Negativform der einzubringenden spezifischen Oberflächenstruktur auf. Es ist auch denkbar, dass die spezifische Oberflächenstruktur nach einer Warmumformung des Schmiedebauteils mittels des Gesenks mit einem weiteren Gesenk in das Schmiedebauteil, insbesondere in dem Teilbereich des Schmiedebauteils, eingebracht wird. Andere, einem Fachmann als sinnvoll erscheinende Einbringungen der spezifischen Oberflächenstruktur während des Schmiedeverfahrens sind ebenfalls denkbar. Mittels der erfindungsgemäßen Ausgestaltung des Schmiedeverfahrens kann vorteilhaft bereits während der Schmiedeumformung eine Einbringung einer für eine Funktion relevanten Oberflächenstruktur in einen, insbesondere bei herkömmlichen Schmiedeverfahren schwer bis nicht zugänglichen, Bereich des Schmiedebauteils erreicht werden. Es kann vorteilhaft eine zusätzliche Nachbearbeitung des Bereichs vermieden werden oder gering gehalten werden.

Ferner wird vorgeschlagen, dass die Biegeumformung des Schmiedebauteils um eine quer, insbesondere zumindest im Wesentlichen senkrecht, zu einer Hauptschmiedekrafteinwirkachse verlaufende Biegeachse erfolgt. Bevorzugt verläuft die Hauptschmiedekrafteinwirkachse, insbesondere auf eine, einem Fachmann bereits bekannte Art und Weise, zumindest im Wesentlichen senkrecht zu einer Oberfläche des Schmiedebauteils. Vorzugsweise wird die Hauptschmiedekrafteinwirkachse, insbesondere auf eine, einem Fachmann bereits bekannte Art und Weise, durch eine Anordnung des Schmiedebauteils in dem Gesenk und eine Wirkrichtung eines Arbeitselements einer Schmiedevorrichtung, insbesondere eines Hydraulikzylinders einer Schmiedepresse, einer Spindelachse einer Schmiedepresse, mittels derer das Schmiedeverfahren durchführbar ist/durchgeführt wird, oder anderen, einem Fachmann als sinnvoll erscheinenden Pressenhauptantriebswirkrichtung einer Schmiedevorrichtung definiert. Bevorzugt wirkt während der Warmumformung des Schmiedebauteils im Gesenk eine Hauptumformkraft der Schmiedevorrichtung, insbesondere auf eine, einem Fachmann bereits bekannte Art und Weise, entlang der Hauptschmiedekrafteinwirkachse. Vorzugsweise verläuft die Biegeachse, um die das Schmiedebauteil mittels der Biegeumformung gebogen wird, zumindest im Wesentlichen parallel zu der Oberfläche des Schmiedebauteils des zumindest einen Teilbereichs des Schmiedebauteils, der während der Schmiedeumformung mit einer spezifischen Oberflächenstruktur versehen wird. Bevorzugt verläuft die Biegeachse, um die das Schmiedebauteil mittels der Biegeumformung gebogen wird, zumindest im Wesentlichen parallel zu der Oberfläche der Innenseite der Dämpferrohraufnahme des als Federbeingabel ausgebildeten Schmiedebauteils. Mittels der erfindungsgemäßen Ausgestaltung des Schmiedeverfahrens kann vorteilhaft ein Schmieden von Schmiedebauteilen mit komplexen Bauteilgeometrien erreicht werden. Es kann vorteilhaft insbesondere eine Einbringung von komplexen Bauteilstrukturen in Teilbereichen des Schmiedebauteils realisiert werden, die in einem konventionellen Schmiedeverfahren ohne eine nachfolgende Biegeumformung schwer zugänglich sind.

Zudem wird vorgeschlagen, dass in dem Schmiedeumformschritt zumindest ein Durchbruch und/oder zumindest eine Vertiefung in einen Tragbereich des Schmiedebauteils und zumindest ein Durchbruch und/oder zumindest eine Vertiefung in einen weiteren Tragbereich des Schmiedebauteils eingebracht werden, wobei der im Tragbereich eingebrachte Durchbruch und/oder die im Tragbereich eingebrachte Vertiefung nach der Biegeumformung des Schmiedebauteils dem im weiteren Tragbereich eingebrachten Durchbruch und/oder der im weiteren Tragbereich eingebrachten Vertiefung gegenüberliegend am Schmiedebauteil angeordnet sind. Erfindungsgemäß wird in dem Schmiedeumformschritt im Tragbereich und im weiteren Tragbereich eine bionische oder eine fachwerkartige Struktur eingebracht. Unter einer "bionischen Struktur" soll in diesem Zusammenhang insbesondere eine auf der Bionik, insbesondere der Konstruktionsbionik, basierende Struktur, insbesondere Tragstruktur, verstanden werden. Die bionische Struktur, insbesondere bionische Tragstruktur, ist dabei insbesondere einer Struktur aus der Natur nachempfunden oder daran angelehnt. Insbesondere ist eine Form der bionischen Struktur, insbesondere bionischen Tragstruktur, an eine natürlich vorkommende Struktur angelehnt. Es sind verschiedene, einem Fachmann als sinnvoll erscheinende Ausgestaltungen der bionischen Struktur denkbar, wie beispielsweise eine Ausgestaltung als eine Gitterstruktur, als eine Wabenstruktur, als eine Netzstruktur oder dergleichen. Es ist denkbar, dass in dem Schmiedeumformschritt, insbesondere mittels einer bionischen Struktur versehene, Gabelarme des als Federbeingabel ausgebildeten Schmiedebauteils, insbesondere ohne eine Dämpferrohraufnahme des als Federbeingabel ausgebildeten Schmiedebauteils, geschmiedet werden und anschließend die geschmiedeten Gabelarme an ein Rohr, ein Strangpressprofil oder dergleichen gefügt werden, insbesondere daran angeschweißt werden, insbesondere um beispielsweise die Dämpferrohraufnahme des als Federbeingabel ausgebildeten Schmiedebauteils an den Gabelarmen anzuordnen. Mittels der erfindungsgemäßen Ausgestaltung des Schmiedeverfahrens kann vorteilhaft eine komplexe Geometrie in das Schmiedebauteil eingebracht werden. Es kann vorteilhaft insbesondere eine Einbringung von komplexen Bauteilstrukturen in Teilbereichen des Schmiedebauteils realisiert werden, die in einem konventionellen Schmiedeverfahren ohne eine nachfolgende Biegeumformung schwer zugänglich sind.

Des Weiteren wird vorgeschlagen, dass das Schmiedeverfahren zumindest einen Lochungs- und/oder Entgratungsschritt umfasst, in dem das Schmiedebauteil, insbesondere nach dem Schmiedeumformschritt, gelocht und/oder entgratet wird, wobei der Lochungs- und/oder Entgratungsschritt vor der Biegeumformung des Schmiedebauteils erfolgt. Vorzugsweise können/kann ein Lochen und/oder Entgraten im Lochungs- und/oder Entgratungsschritt nach einem der in den Normen DIN 8587 bis DIN 8590 genannten Verfahren durchgeführt werden. Es ist jedoch auch denkbar, dass der Lochungs- und/oder Entgratungsschritt mittels eines wasserstrahl- oder laserstrahlbasierten Trennverfahrens erfolgt. Weitere, einem Fachmann als sinnvoll erscheinende Verfahren zur Durchführung des Lochungs- und/oder Entgratungsschritts sind ebenfalls denkbar. Vorzugsweise wird der Lochungs- und/oder Entgratungsschritt mittels der Schmiedevorrichtung, insbesondere mittels einer hydraulischen Spindelpresse, mittels einer mechanischen Spindelpresse, mittels einer elektro-mechanischen Spindelpresse, mittels einer elektro-hydraulischen Spindelpresse, mittels einer Servo-Presse oder mittels einer anderen, einem Fachmann als sinnvoll erscheinenden Schmiedevorrichtung, und einem Lochungs- und/oder Entgratungswerkzeug der Schmiedevorrichtung durchgeführt. Denkbar ist, dass das Schmiedebauteil im Lochungs- und/oder Entgratungsschritt oder einem darauffolgenden Verfahrensschritt, insbesondere vor der Biegeumformung, im Bereich der Biegeachse des Schmiedebauteils, um die das Schmiedebauteil während der Biegeumformung gebogen wird, perforiert, geschlitzt oder eine andere, einem Fachmann als sinnvoll erscheinende Materialschwächung im Bereich der Biegeachse durchgeführt wird, insbesondere um einen geringen Kraftaufwand zu einer Biegung des Schmiedebauteils um die Biegeachse zu ermöglichen. Mittels der erfindungsgemäßen Ausgestaltung des Schmiedeverfahrens kann vorteilhaft eine konstruktiv einfache Vorbereitung des Schmiedebauteils für die Biegeumformung ermöglicht werden. Es kann vorteilhaft ein prozesssicheres Entgraten und/oder Lochen in Bereichen des Schmiedebauteils durchgeführt werden, die insbesondere nach einer Biegeumformung mit hohem Aufwand entgratbar und/oder lochbar sind.

Ferner wird vorgeschlagen, dass das Schmiedeverfahren zumindest eine Wärmebehandlung des Schmiedebauteils umfasst, wobei die Biegeumformung des Schmiedebauteils während der Wärmebehandlung, insbesondere nach einem Lösungsglühen und/oder nach einem Abschrecken, vorzugsweise vor einem Warmauslagern, erfolgt. Vorzugsweise erfolgt die Wärmebehandlung des Schmiedebauteils nach einer Warmumformung im Schmiedeumformschritt. Bevorzugt erfolgt die Wärmebehandlung, insbesondere unabhängig von der Biegeumformung betrachtet, in drei Schritten, wobei ein erster Schritt ein Lösungsglühen ist, ein weiterer Schritt ein Abschrecken ist und ein zusätzlicher Schritt ein Warmauslagern ist. Vorzugsweise erfolgt eine Biegeumformung des Schmiedebauteils nach einem Lösungsglühen und/oder nach einem Abschrecken. Bevorzugt erfolgt eine Biegeumformung des Schmiedebauteils vor einem Warmauslagern. Vorzugsweise erfolgt ein Lösungsglühen des Schmiedebauteils bei Temperaturen von insbesondere mehr als 400 °C, bevorzugt mehr als 450 °C und ganz besonders bevorzugt bei einer Temperatur aus einem Wertebereich von 470 °C bis 560 °C. Insbesondere ist ein Temperaturbereich, in dem das Lösungsglühen erfolgt, auf eine, einem Fachmann bereits bekannte Art und Weise abhängig von dem für das Schmiedebauteil gewählten Werkstoff, so dass ein Fachmann in Abhängigkeit von dem für das Schmiedebauteil gewählten Werkstoff einen sinnvollen Temperaturbereich für das Lösungsglühen wählen wird. Bevorzugt wird das Schmiedebauteil nach dem Lösungsglühen auf eine Temperatur von insbesondere weniger als 200 °C, bevorzugt von weniger als 100 °C und ganz besonders bevorzugt auf eine Temperatur mit einem Wert aus einem Wertebereich von 20 °C bis 75 °C abgeschreckt. Vorzugsweise erfolgt nach dem Abschrecken eine Erwärmung des Schmiedebauteils auf eine Temperatur von insbesondere mehr als 100 °C, bevorzugt weniger als 200 °C und ganz besonders bevorzugt auf eine Temperatur aus einem Wertebereich von 120 °C und 180 °C. Insbesondere erfolgt eine Biegeumformung des Schmiedebauteils nach einer Erwärmung auf eine Temperatur aus einem Wertebereich von 120 °C und 180 °C, vorzugsweise vor einem Warmauslagern des Schmiedebauteils. Es ist jedoch auch alternativ denkbar, dass eine Biegeumformung bei Raumtemperatur oder bei einer Temperatur aus einem Wertebereich von 20 °C bis 75 °C, insbesondere direkt nach dem Abschrecken erfolgt. Bevorzugt erfolgt nach der Biegeumformung, insbesondere anschließend an die Biegeumformung, ein Warmauslagern. Andere, einem Fachmann als sinnvoll erscheinende Schritte und Temperaturen der Wärmebehandlung sind ebenfalls denkbar, insbesondere in Abhängigkeit von dem verwendeten Werkstoff des Schmiedebauteils. Das Schmiedebauteil ist vorzugsweise als Schmiedebauteil aus Aluminium oder aus einer Aluminiumlegierung ausgebildet. Mittels der erfindungsgemäßen Ausgestaltung des Schmiedeverfahrens kann eine vorteilhafte Prozesskette realisiert werden, die insbesondere ressourcenoptimiert ausgebildet werden kann. Es kann vorteilhaft eine für die Wärmebehandlung, insbesondere für das Warmauslagern, sinnvolle Temperatur genutzt werden, um eine Verformbarkeit des Schmiedebauteils bei der Biegeumformung des Schmiedebauteils mit einem geringen Kraftaufwand zu ermöglichen.

Zudem wird vorgeschlagen, dass in zumindest einem Verfahrensschritt, insbesondere vor dem Schmiedeumformschritt, eine Vorbiegeumformung eines Schmiedevorrohlings, insbesondere eines Halbzeugs, aus dem das Schmiedebauteil, insbesondere in dem Schmiedeumformschritt, geschmiedet wird, erfolgt. Es ist jedoch auch alternativ denkbar, dass das Schmiedeverfahren unabhängig von einer Vorbiegeumformung eines Schmiedevorrohlings durchgeführt wird. Bevorzugt ist der Schmiedevorrohling als Aluminiumstange ausgebildet. Vorzugsweise weist der Schmiedevorrohling einen runden Querschnitt auf. Es ist jedoch auch denkbar, dass der Schmiedevorrohling einen polygonalen Querschnitt aufweist. Bevorzugt wird der Schmiedevorrohling in zumindest einem Verfahrensschritt, insbesondere vor einer Vorbiegeumformung auf eine Temperatur aus einem Wertebereich von insbesondere 300 °C bis 600 °C und bevorzugt 350 °C bis 560 °C erwärmt. Vorzugsweise wird der Schmiedevorrohling, insbesondere anschließend an die Erwärmung, während der Vorbiegeumformung gebogen, insbesondere U-förmig gebogen. Bevorzugt wird der Schmiedevorrohling in einem Vorgesenk zum Schmiedebauteil vorgeschmiedet. Vorzugsweise wird das Schmiedebauteil, insbesondere in dem Schmiedeumformschritt, in einem Fertiggesenk fertig geschmiedet. Bevorzugt nach dem Schmiedeumformschritt erfolgt der Lochungs- und/oder Entgratungsschritt, die Wärmebehandlung sowie die Biegeumformung des Schmiedebauteils. Vorzugsweise sind/ist der Schmiedevorrohling und/oder das Schmiedebauteil aus einer Aluminiumlegierung, einer Titanlegierung oder einer anderen, einem Fachmann als sinnvoll erscheinenden Leichtbaulegierung gebildet. Bevorzugt sind/ist der Schmiedevorrohling und/oder das Schmiedebauteil aus einer Legierung, insbesondere einer Aluminiumlegierung, aus der 2000er- (EN AW 2xxx), der 3000er- (EN AW 3XXX), der 4000er- (EN AW 4XXX), der 5000er- (EN AW 5xxx), der 6000er- (EN AW 6xxx), der 7000er- (EN AW 7xxx) oder der 8000er-Reihe (EN AW 8xxx) hergestellt. Bevorzugt sind/ist der Schmiedevorrohling und/oder das Schmiedebauteil insbesondere aus einer technisch nutzbaren Aluminiumlegierung hergestellt, die in ihrer Legierungszusammensetzung mit Werten zumindest einer Reihe aus den EN-AW 1XXXer-8XXXer-Reihen zusammenfällt. Mittels der erfindungsgemäßen Ausgestaltung kann besonders vorteilhaft eine Anpassung des Schmiedevorrohlings an eine Endkontur des Schmiedebauteils erfolgen. Es kann vorteilhaft ein optimiertes Schmiedeverfahren realisiert werden.

Des Weiteren geht die Erfindung aus von einem Schmiedebauteil, insbesondere von einem Leichtbaulegierungsschmiedebauteil, das mittels eines erfindungsgemäßen Schmiedeverfahrens hergestellt ist, wobei das Schmiedebauteil als Federbeingabel ausgebildet ist, die einen als Dämpferrohraufnahme ausgebildeten Teilbereich, einen Tragbereich und einen weiteren Tragbereich umfasst, wobei der Tragbereich und der weitere Tragbereich Gabelarme der Federbeingabel bilden und wobei die Gabelarme durch die Biegeumformung hergestellt sind. Es wird vorgeschlagen, dass die Gabelarme eine mittels des erfindungsgemäßen Schmiedeverfahrens in die Gabelarme eingebrachte, bionische oder fachwerkartige Struktur aufweisen. Vorzugsweise umfasst das Schmiedebauteil zumindest einen bionisch ausgebildeten Teilbereich, insbesondere zumindest einen bionisch ausgebildeten Gabelarm. Vorzugsweise umfasst das Schmiedebauteil den bionisch ausgebildeten Gabelarm und einen weiteren bionisch ausgebildeten Gabelarm. Vorzugsweise weist das als Federbeingabel ausgebildete Schmiedebauteil zumindest die Dämpferrohraufnahme auf, an der der Gabelarm und der weitere Gabelarm angeordnet sind. Bevorzugt sind der Gabelarm und der weitere Gabelarm über die Dämpferrohraufnahme miteinander verbunden. An der Dämpferrohraufnahme ist vorzugsweise eine Spanneinheit angeordnet oder anordenbar. Die Spanneinheit kann als Schraubverbindung, als Rastverbindung, als Schellenverbindung oder dergleichen ausgebildet sein. Mittels der erfindungsgemäßen Ausgestaltung kann vorteilhaft eine gewichts- und funktionsoptimierte Bauteilgeometrie des Schmiedebauteils realisiert werden. Mittels der erfindungsgemäßen Ausgestaltung kann vorteilhaft ein Schmiedebauteil mit einer komplexen Bauteilgeometrie mit verbesserten Eigenschaften hinsichtlich eines Gesamtgewichts, einer hohen Belastbarkeit und mit wenig nachzubearbeitenden Bereichen bereitgestellt werden. Es kann besonders vorteilhaft ein für ein Einsatzgebiet optimiertes Schmiedebauteil mit einem geringen Gewicht realisiert werden.

Das erfindungsgemäße Schmiedeverfahren und/oder das erfindungsgemäße Schmiedebauteil sollen/soll hierbei nicht auf die oben beschriebene Anwendung und Ausführungsform beschränkt sein. Insbesondere können/kann das erfindungsgemäße Schmiedeverfahren und/oder das erfindungsgemäße Schmiedebauteil zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel eines erfindungsgemäßen Verfahrens und mögliche Ausführungsbeispiele von erfindungsgemäßen Schmiedebauteilen gemäß der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ablaufdiagramm eines erfindungsgemäßen Schmiedeverfahrens in einer schematischen Darstellung,
- Fig. 2: eine Ausführungsform eines erfindungsgemäßen Schmiedebauteils, das mittels des erfindungsgemäßen Schmiedeverfahrens hergestellt ist, vor einer Biegeumformung des erfindungsgemäßen Schmiedebauteils in einer schematischen Darstellung,
- Fig. 3: eine weitere Ausführungsform eines erfindungsgemäßen Schmiedebauteils, das mittels des erfindungsgemäßen Schmiedeverfahrens hergestellt ist, vor einer Biegeumformung des erfindungsgemäßen Schmiedebauteils in einer schematischen Darstellung,
- Fig. 4a: eine Biegeumformung eines erfindungsgemäßen Schmiedebauteils gemäß des erfindungsgemäßen Schmiedeverfahrens in einer schematischen Darstellung,
- Fig. 4b: eine Detailansicht einer mittels des erfindungsgemäßen Schmiedeverfahrens in ein erfindungsgemäßes Schmiedebauteil eingebrachten spezifischen Oberfläche in einer schematischen Darstellung und
- Fig. 5: ein erfindungsgemäßes Schmiedebauteil, das als Federbeingabel ausgebildet ist und mittels des erfindungsgemäßen Schmiedeverfahrens hergestellt ist, in einer schematischen Darstellung.

### Beschreibung der Ausführungsbeispiele

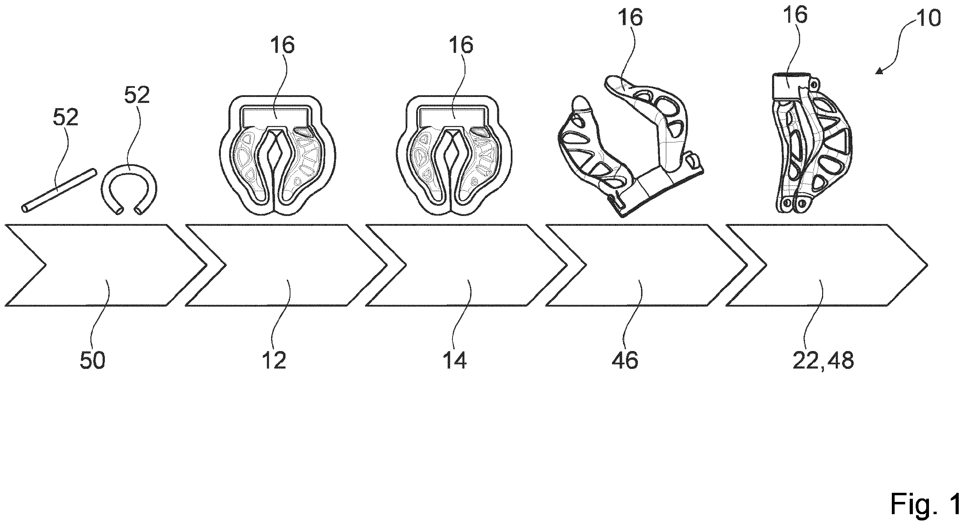

Figur 1 zeigt schematisch ein Ablaufdiagramm eines Schmiedeverfahrens 10, insbesondere eines Leichtbaulegierungsschmiedeverfahrens, zu einer Herstellung von Leichtbaulegierungsbauteilen für den Automobil-, Luftfahrt- und/oder Industriebereich. Das Schmiedeverfahrens 10 eignet sich vor allem zu einer Herstellung von Schmiedebauteilen 16 mit einer komplexen Bauteilgeometrie aus einer Leichtbaulegierung, wie beispielsweise einer Aluminiumknetlegierung. Das Schmiedeverfahren 10 ist jedoch nicht eingeschränkt auf eine Herstellung von Schmiedebauteilen 16 aus Leichtbaulegierungen. Es ist auch denkbar, dass mittels des Schmiedeverfahrens 10 andere, einem Fachmann als sinnvoll erscheinende Bauteile hergestellt werden.

Für die Herstellung des Schmiedebauteils 16 mittels des Schmiedeverfahrens 10 wird auf eine einem Fachmann bereits bekannte Weise in zumindest einem Verfahrensschritt (hier nicht näher dargestellt) des Schmiedeverfahrens 10 aus einem Halbzeug, insbesondere einem Aluminiumhalbzeug, ein Schmiedevorrohling 52 erzeugt, insbesondere in Form einer Stange oder einer Scheibe. Es ist jedoch auch denkbar, dass der zumindest eine Verfahrensschritt zu einer Erzeugung des Schmiedevorrohlings 52 bei dem Schmiedeverfahren 10 entfällt, da beispielsweise der Schmiedevorrohling 52 als Stangenware zugekauft wird und beispielsweise nur ein Ablängen der Stangenware auf eine gewünschte Länge des Schmiedevorrohlings 52 sowie oder ausschließlich ein Zuführen des Schmiedevorrohlings 52, insbesondere in Form eines bereits auf Länge zugeschnittenen und zugekauften Schmiedevorrohlings 52, ein Teil des Schmiedeverfahrens 10 sind/ist. Der Schmiedevorrohling 52 kann in einem Verfahrensschritt des Schmiedeverfahrens 10, insbesondere vor einem Schmiedeumformschritt 12, 14 des Schmiedeverfahrens 10, vorbearbeitet werden, insbesondere in Form einer Vorformung, oder direkt einem Schmiedewerkzeug, insbesondere einem Vorgesenk oder einem Fertiggesenk, zugeführt werden, insbesondere in Abhängigkeit von einer Endgeometrie des herzustellenden Schmiedebauteils 16.

Das im Folgenden beschriebene Schmiedeverfahren 10 ist bevorzugt zu einer Herstellung des als Federbeingabel ausgebildeten Schmiedebauteils 16 vorgesehen. Der Schmiedevorrohling 52 wird vorzugsweise vorbearbeitet, insbesondere zu einem Ermöglichen eines vorteilhaften Umformprozesses. In zumindest dem Verfahrensschritt 50 des Schmiedeverfahrens 10, insbesondere vor dem Schmiedeumformschritt 12, 14 des Schmiedeverfahrens 10, erfolgt eine Vorbiegeumformung des Schmiedevorrohlings 52, aus dem das Schmiedebauteil 16, insbesondere in dem Schmiedeumformschritt 12, 14, geschmiedet wird. Der Schmiedevorrohling 52 wird vorzugsweise in dem Verfahrensschritt 50 des Schmiedeverfahrens 10 vorgebogen, insbesondere U-förmig gebogen. Der Schmiedevorrohling 52 wird, insbesondere nach der Vorbiegeumformung des Schmiedevorrohlings 52, in ein als Vorgesenk ausgebildetes Schmiedewerkzeug (hier nicht näher dargestellt) eingelegt. In zumindest einem Verfahrensschritt, insbesondere in einem ersten Schmiedeumformschritt 12, des Schmiedeverfahrens 10 wird das Schmiedebauteil 16 in dem, insbesondere als Vorgesenk ausgebildeten, Schmiedewerkzeug umgeformt. Das Schmiedebauteil 16 wird, insbesondere nach einer Bearbeitung in dem als Vorgesenk ausgebildeten Schmiedewerkzeug, einem weiteren, insbesondere als Fertiggesenk, ausgebildeten Schmiedewerkzeug (hier nicht näher dargestellt) zugeführt, insbesondere in dem weiteren, insbesondere als Fertiggesenk, ausgebildeten Schmiedewerkzeug eingelegt. In zumindest einem Verfahrensschritt, insbesondere in einem zweiten Schmiedeumformschritt 14, des Schmiedeverfahrens 10 wird das Schmiedebauteil 16 in dem, insbesondere als Fertiggesenk ausgebildeten, weiteren Schmiedewerkzeug umgeformt. Es ist jedoch auch denkbar, dass das Schmiedebauteil 16 lediglich einen Schmiedeumformschritt 12, 14 durchläuft und in diesem ein Schmiedeumformschritt 12, 14 ausgehend von dem Schmiedevorrohling 52 zum Schmiedebauteil 16 fertiggeschmiedet wird.

In zumindest einem Verfahrensschritt 22 des Schmiedeverfahrens 10, insbesondere nach einer Schmiedeumformung in dem ersten Schmiedeumformschritt 12 und/oder in dem zweiten Schmiedeumformschritt 14, erfolgt eine Biegeumformung des Schmiedebauteils 16, insbesondere eine Biegeumformung um mehr als 60° zumindest eines Teilbereichs des Schmiedebauteils 16. Vorzugsweise erfolgt die Biegeumformung zumindest eines Teilbereichs des Schmiedebauteils 16, insbesondere um eine Biegeachse 32 des Schmiedebauteils 16, insbesondere um mehr als 90°, bevorzugt um mehr als 120° und besonders bevorzugt um mehr als 160°. Bevorzugt erfolgt die Biegeumformung des Schmiedebauteils 16, insbesondere zumindest eines Teilbereichs des Schmiedebauteils 16, um 180° um die Biegeachse 32 des Schmiedebauteils 16. Vorzugsweise werden mittels der Biegeumformung zwei vor der Biegeumformung voneinander abgewandte Enden des Schmiedebauteils 16 und/oder zumindest im Wesentlichen in einer gemeinsamen Ebene angeordnete Tragbereiche 38, 44 des Schmiedebauteils 16, insbesondere Gabelarme 18, 20 des als Federbeingabel ausgebildeten Schmiedebauteils 16, aufeinander zu gebogen. Bevorzugt werden die Tragbereiche 38, 44 mittels der Biegeumformung derart gebogen, dass die Tragbereiche 38, 44 nach der Biegeumformung in zueinander zumindest im Wesentlichen parallelen Ebenen ausgerichtet sind. Bevorzugt sind/ist der Tragbereich 38 und/oder der weitere Tragbereich 44 als Gabelarm/e 18, 20 des als Federbeingabel ausgebildeten Schmiedebauteils 16 ausgebildet.

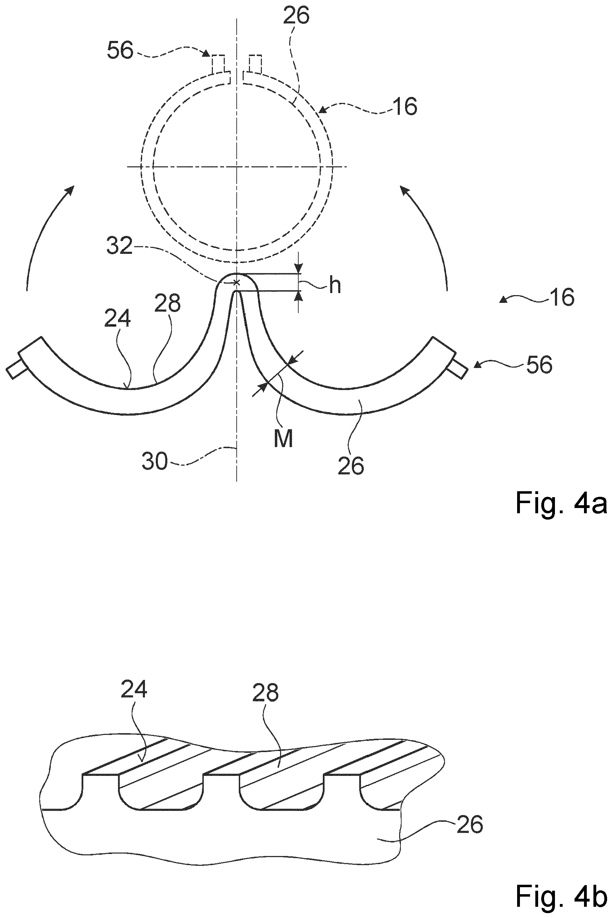

Die Biegeumformung des Schmiedebauteils 16 erfolgt um die quer, insbesondere zumindest im Wesentlichen senkrecht, zu einer Hauptschmiedekrafteinwirkachse 30 verlaufende Biegeachse 32 (vgl. Figur 4a). Bevorzugt erfolgt die Biegeumformung des Schmiedebauteils 16 außerhalb des Gesenks, in dem das Schmiedebauteil 16, insbesondere während der Schmiedeumformung, warmumgeformt wird. Es ist jedoch auch denkbar, dass das Gesenk, in dem das Schmiedebauteil 16 warmumgeformt wird, mehrteilig ausgebildet ist, insbesondere mehrere miteinander beweglich verbundene Teilbereiche aufweist, und bewegliche Teilbereiche des Gesenks, insbesondere nach einer Warmumformung des Schmiedebauteils 16 im Gesenk, zu einer Biegeumformung des Schmiedebauteils 16 relativ zueinander, insbesondere um die Biegeachse 32, bewegt werden, um die Biegeumformung des Schmiedebauteils 16 durchzuführen.

Die Biegeachse 32 des Schmiedebauteils 16 verläuft bevorzugt zumindest im Wesentlichen parallel zu einer Längsachse des Schmiedebauteils 16, insbesondere zu Längsachsen von den Gabelarmen 18, 20 des als Federbeingabel ausgebildeten Schmiedebauteils 16. Bevorzugt verläuft die Biegeachse 32 zumindest im Wesentlichen parallel zu einer Längsachse eines als Dämpferrohraufnahme 26 ausgebildeten Teilbereichs des als Federbeingabel ausgebildeten Schmiedebauteils 16. Es ist jedoch auch denkbar, dass eine zusätzliche Biegeumformung des Schmiedebauteils 16 um eine andere, einem Fachmann als sinnvoll erscheinende Achse des Schmiedebauteils 16 erfolgt, wie beispielsweise um eine Querachse, die quer, insbesondere zumindest im Wesentlichen senkrecht, zur Längsachse des Schmiedebauteils 16 verläuft.

In zumindest einem Verfahrensschritt des Schmiedeverfahrens 10, insbesondere vor der Biegeumformung, vorzugsweise im ersten Schmiedeumformschritt 12 und/oder im zweiten Schmiedeumformschritt 14, wird eine Oberfläche 24 des Schmiedebauteils 16 zumindest in einem Teilbereich des Schmiedebauteils 16, insbesondere an einer Innenseite der Dämpferrohraufnahme 26 des als Federbeingabel ausgebildeten Schmiedebauteils 16, mit einer spezifischen Oberflächenstruktur 28 (vgl. Figur 4b) versehen. Die spezifische Oberflächenstruktur 28 kann beispielsweise als Riffelung der Oberfläche 24, als Querrippen, als Längsrippen, als wabenartige Einprägung oder als eine andere, einem Fachmann als sinnvoll erscheinende spezifische Oberflächenstruktur 28 ausgebildet sein. Bevorzugt wird im ersten Schmiedeumformschritt 12 und/oder im zweiten Schmiedeumformschritt 14 die Oberfläche 24 des Schmiedebauteils 16 zumindest in einem Teilbereich des Schmiedebauteils 16, insbesondere an der Innenseite der Dämpferrohraufnahme 26 des als Federbeingabel ausgebildeten Schmiedebauteils 16, mit der spezifischen Oberflächenstruktur 28 versehen, wobei die spezifische Oberflächenstruktur 28 als Riffelung der Oberfläche 24, als Rippen, als Wabenstruktur oder dergleichen ausgebildet ist. Vorzugsweise weist das Vorgesenk und/oder das Fertiggesenk zumindest in einem Teilbereich des Vorgesenks und/oder des Fertiggesenks, mittels dessen das Schmiedebauteil 16 während der Schmiedeumformung warmumgeformt wird, eine Negativform der einzubringenden spezifischen Oberflächenstruktur 28 auf. Es ist auch denkbar, dass die spezifische Oberflächenstruktur 28 nach einer Warmumformung des Schmiedebauteils 16 mittels des Vorgesenks und/oder des Fertiggesenks mit einem weiteren Gesenk oder mittels eines abtragenden Verfahrens in das Schmiedebauteil 16, insbesondere in dem Teilbereich des Schmiedebauteils 16, eingebracht wird. Denkbar ist auch, dass neben abtragenden Verfahren, wie beispielsweise spanabhebende Verfahren (Fräsen/Drehen) oder strahlenbasierten Verfahren (Laser) auch weitere umformende Verfahren, wie beispielswiese Prägen, zu einem Einbringen der spezifischen Oberflächenstruktur 28 genutzt werden. Alternativ oder zusätzlich ist denkbar, dass ein Einbringen der spezifischen Oberflächenstruktur 28 während der Biegeumformung des Schmiedebauteils 16 erfolgt. Beispielsweise könnte ein Biegewerkzeug, mittels dessen die Biegeumformung des Schmiedebauteils 16 erfolgt, eine zur spezifischen Oberflächenstruktur 28 negative Form aufweisen, mittels derer die spezifische Oberflächenstruktur 28 während der Biegeumformung des Schmiedebauteils 16 in das Schmiedebauteil 16 eingebracht wird.

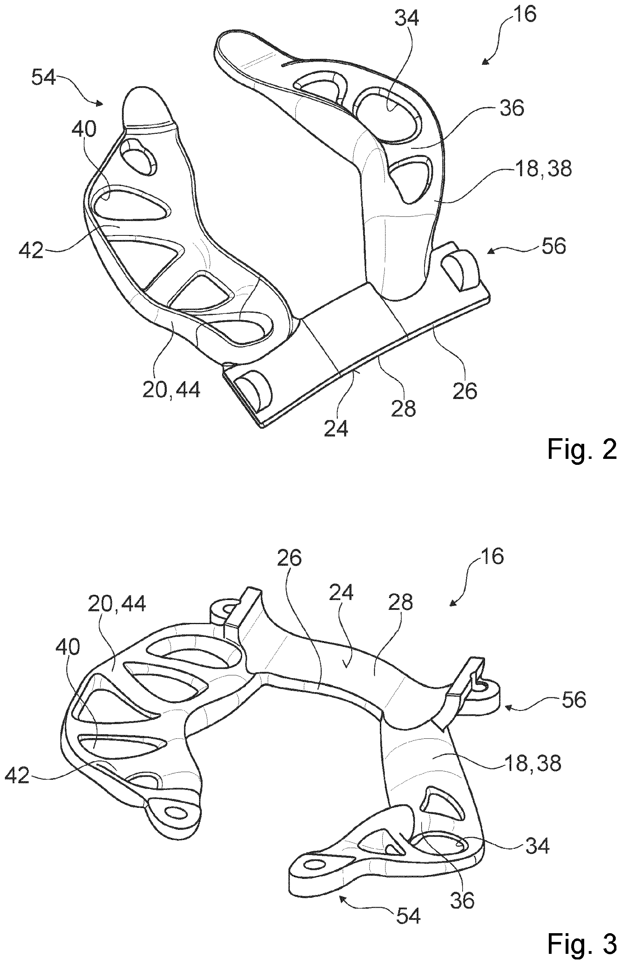

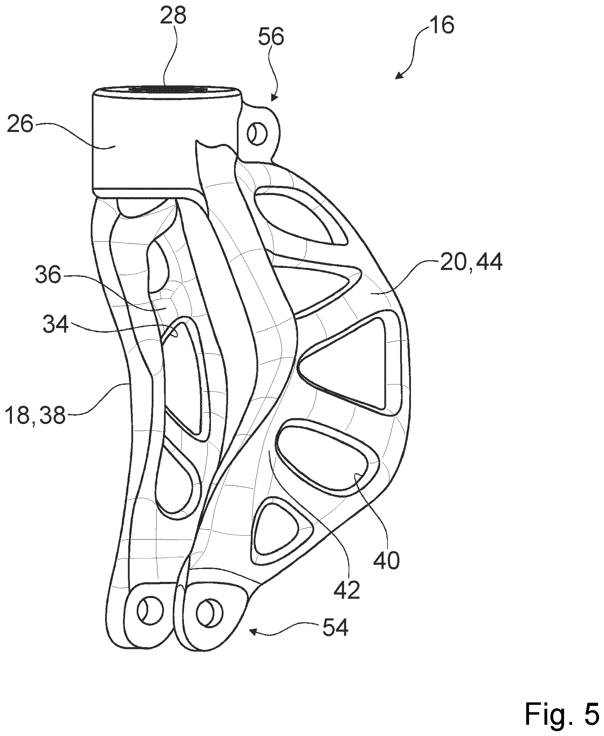

In dem ersten Schmiedeumformschritt 12 und/oder in dem zweiten Schmiedeumformschritt 14 werden zumindest ein Durchbruch 34 und/oder zumindest eine Vertiefung 36 in den Tragbereich 38 des Schmiedebauteils 16 und zumindest ein Durchbruch 40 und/oder zumindest eine Vertiefung 42 in den weiteren Tragbereich 44 des Schmiedebauteils 16 eingebracht (vgl. auch Figuren 2, 3 und 5), wobei der im Tragbereich 38 eingebrachte Durchbruch 34 und/oder die im Tragbereich 38 eingebrachte Vertiefung 36 nach der Biegeumformung des Schmiedebauteils 16 dem im weiteren Tragbereich 44 eingebrachten Durchbruch 40 und/oder der im weiteren Tragbereich 44 eingebrachten Vertiefung 42 gegenüberliegend am Schmiedebauteil 16 angeordnet sind (vgl. Figur 5).

Vorzugsweise wird in dem ersten Schmiedeumformschritt 12 und/oder in dem zweiten Schmiedeumformschritt 14 im Tragbereich 38 und im weiteren Tragbereich 44 eine bionische oder eine fachwerkartige Struktur eingebracht. Die bionische Struktur, insbesondere bionische Tragstruktur, ist insbesondere einer Struktur aus der Natur nachempfunden oder daran angelehnt. Insbesondere ist eine Form der bionischen Struktur, insbesondere bionischen Tragstruktur, an eine natürlich vorkommende Struktur angelehnt. Es sind verschiedene, einem Fachmann als sinnvoll erscheinende Ausgestaltungen der bionischen Struktur denkbar, wie beispielsweise eine Ausgestaltung als eine Gitterstruktur, als eine Wabenstruktur, als eine Netzstruktur oder dergleichen. Vorzugsweise wird die bionische Struktur anhand einer Computersimulation in Abhängigkeit von einem im Einsatz des Schmiedebauteils 16 auftretenden Belastungsfall generiert und mittels des Vorgesenks und/oder des Fertiggesenks während dem ersten Schmiedeumformschritt 12 und/oder dem zweiten Schmiedeumformschritt 14 im Tragbereich 38 und im weiteren Tragbereich 44 eingebracht, insbesondere infolge der Einbringung der Durchbrüche 34, 40 und/oder Vertiefungen 36, 42 im Tragbereich 38 und im weiteren Tragbereich 44.

Das Schmiedeverfahren 10 umfasst zumindest einen Lochungs- und/oder Entgratungsschritt 46, in dem das Schmiedebauteil 16, insbesondere nach dem ersten Schmiedeumformschritt 12 und/oder nach dem zweiten Schmiedeumformschritt 14, gelocht und/oder entgratet wird, wobei der Lochungs- und/oder Entgratungsschritt 46 vor der Biegeumformung des Schmiedebauteils 16 erfolgt. Vorzugsweise wird der Lochungs- und/oder Entgratungsschritt 46 mittels eines Stanzwerkzeugs durchgeführt. Denkbar ist, dass das Schmiedebauteil 16 im Lochungs- und/oder Entgratungsschritt 46 oder einem darauffolgenden Verfahrensschritt, insbesondere vor der Biegeumformung, im Bereich der Biegeachse 32 des Schmiedebauteils 16, um die das Schmiedebauteil 16 während der Biegeumformung gebogen wird, perforiert, geschlitzt oder eine andere, einem Fachmann als sinnvoll erscheinende Materialschwächung im Bereich der Biegeachse 32 durchgeführt wird, insbesondere um einen geringen Kraftaufwand zu einer Biegung des Schmiedebauteils 16 um die Biegeachse 32 zu ermöglichen. Es ist auch denkbar, dass, insbesondere vor einer Biegeumformung, ein definierter Bereich des Schmiedebauteils 16 mittels eines Gesenkbiegens, mittels eines Rollbiegens oder mittels eines Schwenkbiegeprozesses, insbesondere vorgebogen, gebogen wird. Es ist auch denkbar, dass, insbesondere durch einen Gabelarm 18, 20 getrennte, Teilbereiche des Schmiedebauteils 16, nacheinander oder gemeinsam gebogen werden, insbesondere während Teilschritten der Biegeumformung. Bevorzugt ist eine maximale Höhe h des Schmiedebauteils 16 im Bereich der Biegeachse 32 (vgl. Figur 4a) kleiner als eine maximale Materialstärke M des Schmiedebauteils 16, insbesondere der Gabelarme 18, 20 des Schmiedebauteils 16 (vgl. Figur 4a). Die maximale Höhe h des Schmiedebauteils 16 verläuft vorzugsweise zumindest im Wesentlichen senkrecht zur Biegeachse 32 und zumindest im Wesentlichen parallel zur Hauptschmiedekrafteinwirkachse 30. Die maximale Materialstärke M verläuft vorzugsweise in einer zumindest im Wesentlichen senkrecht zur Biegeachse 32 verlaufenden Ebene.

Das Schmiedeverfahren 10 umfasst zumindest eine Wärmebehandlung 48 des Schmiedebauteils 16, wobei die Biegeumformung des Schmiedebauteils 16 während der Wärmebehandlung 48, insbesondere nach einem Lösungsglühen und/oder nach einem Abschrecken, vorzugsweise vor einem Warmauslagern, erfolgt. Vorzugsweise erfolgt die Wärmebehandlung 48 des Schmiedebauteils 16 nach einer Warmumformung im ersten Schmiedeumformschritt 12 und/oder im zweiten Schmiedeumformschritt 14. Bevorzugt erfolgt die Wärmebehandlung 48, insbesondere unabhängig von der Biegeumformung betrachtet, in drei Schritten, wobei ein erster Schritt ein Lösungsglühen ist, ein weiterer Schritt ein Abschrecken ist und ein zusätzlicher Schritt ein Warmauslagern ist. Vorzugsweise erfolgt eine Biegeumformung des Schmiedebauteils 16 nach einem Lösungsglühen und/oder nach einem Abschrecken. Bevorzugt erfolgt eine Biegeumformung des Schmiedebauteils 16 vor einem Warmauslagern. Vorzugsweise erfolgt ein Lösungsglühen des Schmiedebauteils 16 bei Temperaturen von insbesondere mehr als 400 °C, bevorzugt mehr als 450 °C und ganz besonders bevorzugt bei einer Temperatur aus einem Wertebereich von 470 °C bis 560 °C. Bevorzugt wird das Schmiedebauteil 16 nach dem Lösungsglühen auf eine Temperatur von insbesondere weniger als 200 °C, bevorzugt von weniger als 100 °C und ganz besonders bevorzugt auf eine Temperatur mit einem Wert aus einem Wertebereich von 20 °C bis 75 °C abgeschreckt. Vorzugsweise erfolgt nach dem Abschrecken eine Erwärmung des Schmiedebauteils 16 auf eine Temperatur von insbesondere mehr als 100 °C, bevorzugt weniger als 200 °C und ganz besonders bevorzugt auf eine Temperatur aus einem Wertebereich von 120 °C und 180 °C. Insbesondere erfolgt eine Biegeumformung des Schmiedebauteils 16 nach einer Erwärmung auf eine Temperatur aus einem Wertebereich von 120 °C und 180 °C, vorzugsweise vor einem Warmauslagern des Schmiedebauteils 16. Bevorzugt erfolgt nach der Biegeumformung, insbesondere anschließend an die Biegeumformung, ein Warmauslagern des Schmiedebauteils 16.

In einem weiteren Verfahrensschritt (hier nicht näher dargestellt) erfolgt eine Endbearbeitung des Schmiedebauteils 16. Insbesondere erfolgt die Endbearbeitung nach der Wärmebehandlung 48 des Schmiedebauteils 16. Bevorzugt erfolgt bei der Endbearbeitung eine spanende Bearbeitung von Bereichen des Schmiedebauteils 16, insbesondere von Fahrwerksanbindungsbereichen 54 oder von Spanneinheitsanbindungsbereichen 56 des Schmiedebauteils 16. Es ist jedoch auch denkbar, dass in Abhängigkeit von Bauteilanforderungen und/oder Herstellervorgaben eine Endbearbeitung wegfallen kann und das Schmiedebauteil 16, insbesondere nach der Wärmebehandlung 48, einsatzbereit ist.

Figur 2 zeigt eine Ausführungsform des Schmiedebauteils 16, das mittels des Schmiedeverfahrens 10 hergestellt ist, vor einer Biegeumformung des Schmiedebauteils 16. Das in Figur 2 dargestellte Schmiedebauteil 16 weist insbesondere vor einer Biegeumformung und nach einer Warmumformung im ersten Schmiedeumformschritt 12 und/oder im zweiten Schmiedeumformschritt 14 im Bereich der Dämpferrohraufnahme 26 einen im Wesentlichen konstanten Radius über eine gesamte Erstreckung der Dämpferrohraufnahme 26 auf.

Figur 3 zeigt eine weitere Ausführungsform des Schmiedebauteils 16, das mittels des Schmiedeverfahrens 10 hergestellt ist, vor einer Biegeumformung des Schmiedebauteils 16. Das in Figur 3 dargestellte Schmiedebauteil 16 weist insbesondere vor einer Biegeumformung und nach einer Warmumformung im ersten Schmiedeumformschritt 12 und/oder im zweiten Schmiedeumformschritt 14 im Bereich der Dämpferrohraufnahme 26 unterschiedliche Radien über eine gesamte Erstreckung der Dämpferrohraufnahme 26 auf. Vorzugsweise weist die Dämpferrohraufnahme 26 vor einer Biegeumformung eine wellenartige Ausgestaltung auf. Bevorzugt weist die Dämpferrohraufnahme 26 vor einer Biegeumformung im Bereich der Biegeachse 32, insbesondere in einem Mittelbereich, eine konvexe Wölbung auf, wobei zwei daran anschließende Seitenbereiche eine konkave Wölbung aufweisen. Weitere einem Fachmann als sinnvoll erscheinende Ausgestaltungen der Dämpferrohraufnahme 26 vor einer Biegeumformung, insbesondere im Bereich der Biegeachse 32, insbesondere zu einem Ermöglichen eines vorteilhaften Umformprozesses, sind ebenfalls denkbar.

Figur 5 zeigt das Schmiedebauteil 16, das mittels des Schmiedeverfahrens 10 hergestellt ist. Das Schmiedebauteil 16 ist als Federbeingabel ausgebildet. Das Schmiedebauteil 16 umfasst zumindest einen bionisch ausgebildeten Teilbereich, insbesondere zumindest den bionisch ausgebildeten Gabelarm 18, 20. Vorzugsweise umfasst das Schmiedebauteil 16 den bionisch ausgebildeten Gabelarm 18 und einen weiteren bionisch ausgebildeten Gabelarm 20. Vorzugsweise weist das als Federbeingabel ausgebildete Schmiedebauteil 16 zumindest die Dämpferrohraufnahme 26 auf, an der der Gabelarm 18 und der weitere Gabelarm 20 angeordnet sind. Bevorzugt sind der Gabelarm 18 und der weitere Gabelarm 20 über die Dämpferrohraufnahme 26 miteinander verbunden. Die Dämpferrohraufnahme 26 umfasst vorzugsweise an der Innenseite die spezifische Oberflächenstruktur 28. An der Dämpferrohraufnahme 26 ist vorzugsweise eine Spanneinheit (hier nicht näher dargestellt) angeordnet oder anordenbar. Die Spanneinheit kann als Schraubverbindung, als Rastverbindung, als Schellenverbindung oder als andere einem Fachmann als sinnvoll erscheinende Spanneinheit ausgebildet sein.

### Bezugszeichen

- 10: Schmiedeverfahren
- 12: Schmiedeumformschritt
- 14: Schmiedeumformschritt
- 16: Schmiedebauteil
- 18: Gabelarm
- 20: Gabelarm
- 22: Verfahrensschritt
- 24: Oberfläche
- 26: Dämpferrohraufnahme
- 28: Oberflächenstruktur
- 30: Hauptschmiedekrafteinwirkachse
- 32: Biegeachse
- 34: Durchbruch
- 36: Vertiefung
- 38: Tragbereich
- 40: Durchbruch
- 42: Vertiefung
- 44: Tragbereich
- 46: Lochungs- und/oder Entgratungsschritt
- 48: Wärmebehandlung
- 50: Verfahrensschritt
- 52: Schmiedevorrohling
- h: maximale Höhe
- M: maximale Materialstärke
- 54: Fahrwerksanbindungsbereich
- 56: Spanneinheitsanbindungsbereich

## Patentansprüche

1. Schmiedeverfahren, insbesondere Leichtbaulegierungsschmiedeverfahren, wobei in zumindest einem Schmiedeumformschritt (12, 14) ein Schmiedebauteil (16) in einem Schmiedewerkzeug, insbesondere in einem Gesenk, warmumgeformt wird, wobei in dem Schmiedeumformschritt (12, 14) Gabelarme (18, 20) des als Federbeingabel ausgebildeten Schmiedebauteils (16) geschmiedet werden, wobei in zumindest einem Verfahrensschritt (22) nach einer Schmiedeumformung eine Biegeumformung des Schmiedebauteils (16), insbesondere eine Biegeumformung um mehr als 60° zumindest eines Teilbereichs des Schmiedebauteils (16), erfolgt, wobei die Biegeumformung des Schmiedebauteils (16) um eine Biegeachse des Schmiedebauteils (16) erfolgt, die zumindest im Wesentlichen parallel zu Längsachsen der Gabelarme (18, 20) des als Federbeingabel ausgebildeten Schmiedebauteils (16) verläuft, wobei in dem Schmiedeumformschritt (12, 14) in die Gabelarme (18, 20) eine bionische oder eine fachwerkartige Struktur eingebracht wird.

2. Schmiedeverfahren nach Anspruch 1, **dadurch gekennzeichnet, dass** in zumindest einem Verfahrensschritt, insbesondere vor der Biegeumformung, vorzugsweise im Schmiedeumformschritt (12, 14), eine Oberfläche (24) des Schmiedebauteils (16) an einer Innenseite einer Dämpferrohraufnahme (26) des als Federbeingabel ausgebildeten Schmiedebauteils (16) mit einer spezifischen Oberflächenstruktur (28) versehen wird.

3. Schmiedeverfahren nach Anspruch 1 oder 2, **dadurch gekennzeichnet, dass** die Biegeumformung des Schmiedebauteils (16) um eine quer, insbesondere zumindest im Wesentlichen senkrecht, zu einer Hauptschmiedekrafteinwirkachse (30) verlaufende Biegeachse (32) erfolgt.

4. Schmiedeverfahren nach einem der vorhergehenden Ansprüche, **dadurch gekennzeichnet, dass** in dem Schmiedeumformschritt (12, 14) zumindest ein Durchbruch (34) und/oder zumindest eine Vertiefung (36) in einen Tragbereich (38) des Schmiedebauteils (16) und zumindest ein Durchbruch (40) und/oder zumindest eine Vertiefung (42) in einen weiteren Tragbereich (44) des Schmiedebauteils (16) eingebracht werden, wobei der im Tragbereich (38) eingebrachte Durchbruch (34) und/oder die im Tragbereich (38) eingebrachte Vertiefung (36) nach der Biegeumformung des Schmiedebauteils (16) dem im weiteren Tragbereich (44) eingebrachten Durchbruch (40) und/oder der im weiteren Tragbereich (44) eingebrachten Vertiefung (42) gegenüberliegend am Schmiedebauteil (16) angeordnet sind.

5. Schmiedeverfahren nach einem der vorhergehenden Ansprüche,
**gekennzeichnet durch** zumindest einen Lochungs- und/oder Entgratungsschritt (46), in dem das Schmiedebauteil (16), insbesondere nach dem Schmiedeumformschritt (12, 14), gelocht und/oder entgratet wird, wobei der Lochungs- und/oder Entgratungsschritt (46) vor der Biegeumformung des Schmiedebauteils (16) erfolgt.

6. Schmiedeverfahren nach einem der vorhergehenden Ansprüche,
**gekennzeichnet durch** zumindest eine Wärmebehandlung (48) des Schmiedebauteils (16), wobei die Biegeumformung des Schmiedebauteils (16) während der Wärmebehandlung (48), insbesondere nach einem Lösungsglühen und/oder nach einem Abschrecken, vorzugsweise vor einem Warmauslagern, erfolgt.

7. Schmiedeverfahren nach einem der vorhergehenden Ansprüche, **dadurch gekennzeichnet, dass** in zumindest einem Verfahrensschritt (50), insbesondere vor dem Schmiedeumformschritt (12, 14), eine Vorbiegeumformung eines Schmiedevorrohlings (52), insbesondere eines Halbzeugs, aus dem das Schmiedebauteil (16), insbesondere in dem Schmiedeumformschritt (12, 14), geschmiedet wird, erfolgt.

8. Schmiedebauteil (16), insbesondere Leichtbaulegierungsschmiedebauteil, das mittels eines Schmiedeverfahrens nach einem der Ansprüche 1 bis 7 hergestellt ist, wobei das Schmiedebauteil (16) als Federbeingabel ausgebildet ist, die einen als Dämpferrohraufnahme (26) ausgebildeten Teilbereich, einen Tragbereich (38) und einen weiteren Tragbereich (44) umfasst, wobei der Tragbereich (38) und der weitere Tragbereich (44) Gabelarme (18, 20) der Federbeingabel bilden, **dadurch gekennzeichnet, dass** die Gabelarme (18, 20) eine mittels des Schmiedeverfahrens in die Gabelarme (18, 20) eingebrachte bionische oder fachwerkartige Struktur aufweisen.

## Claims

1. Forging method, in particular lightweight-construction alloy forging method, wherein in at least one forge-forming step (12, 14) a forging component (16) is heat-formed in a forging tool, in particular in a swage,
wherein in the forge-forming step (12, 14) swingarms (18, 20) of the forging component (16), which is realized as a suspension fork, are forged, wherein after a forge-forming, in at least one method step (22), a bending-forming of the forging component (16), in particular a bending-forming by more than 60° at least of a portion of the forging component (16), is effected, wherein the bending-forming of the forging component (16) is effected around a bending axis of the forging component (16) that extends at least substantially parallel to longitudinal axes of the swingarms (18, 20) of the forging component (16) which is realized as a suspension fork,
wherein in the forge-forming step (12, 14) a bionic structure or a timber-frame-like structure is introduced into the swingarms (18, 20).

2. Forging method according to claim 1,
**characterised in that** in at least one method step, in particular before the bending-forming, preferably in the forge-forming step (12, 14), a surface (24) of the forging component (16) on an inner face of a damper tube receptacle (26) of the forging component (16), which is realized as a suspension fork, is provided with a specific surface structure (28).

3. Forging method according to claim 1 or 2,
**characterised in that** the bending-forming of the forging component (16) is effected around a bending axis (32) which runs transversely, in particular at least substantially perpendicularly, to a main forging-force action axis (30).

4. Forging method according to one of the preceding claims,
**characterised in that** in the forge-forming step (12, 14) at least one breakthrough (34) and/or at least one deepening (36) are introduced into a supporting region (38) of the forging component (16), and at least one breakthrough (40) and/or at least one deepening (42) are introduced into a further supporting region (44) of the forging component (16),
wherein after the bending-forming of the forging component (16), the breakthrough (34) introduced in the supporting region (38) and/or the deepening (36) introduced in the supporting region (38) are arranged at the forging component (16) opposite the breakthrough (40) introduced in the further supporting region (44) and/or opposite the deepening (42) introduced in the further supporting region (44).

5. Forging method according to one of the preceding claims,
**characterised by** at least one perforating and/or deburring step (46) in which the forging component (16) is perforated and/or deburred, in particular after the forge-forming step (12, 14), the perforating and/or deburring step (46) being effected before the bending-forming of the forging component (16).

6. Forging method according to one of the preceding claims,
**characterised by** at least one heat treatment (48) of the forging component (16), wherein the bending-forming of the forging component (16) is effected during the heat treatment (48), in particular after a solution annealing and/or after a quenching, preferably before an artificial ageing.

7. Forging method according to one of the preceding claims,
**characterised in that** in at least one method step (50), in particular before the forge-forging step (12, 14), a pre-bending-forming is effected of a forging pre-blank (52), in particular a semi-finished product, from which the forging component (16) is forged, in particular in the forge-forming step (12, 14).

8. Forging component (16), in particular lightweight-construction alloy forging component, which is produced by means of a forging method according to one of claims 1 to 7,
wherein the forging component (16) is realized as a suspension fork comprising a subregion that is realized as a damper tube receptacle (26), a supporting region (38) and a further supporting region (44),
wherein the supporting region (38) and the further supporting region (44) form swingarms (18, 20) of the suspension fork,
**characterised in that** the swingarms (18, 20) have a bionic or timber-frame-like structure introduced into the swingarms (18, 20) by means of the forging method.

## Revendications

1. Procédé de forgeage, en particulier procédé de forgeage d'alliages à construction légère,
où dans au moins une étape de façonnage-forgeage (12, 14) un composant à forgeage (16) est façonné à chaud dans un outil de forgeage, en particulier dans une matrice,
où dans l'étape de façonnage-forgeage (12, 14) des bras oscillants (18, 20) du composant à forgeage (16), réalisé comme fourche suspendue, sont forgés, où dans au moins une étape de procédé (22) après un façonnage-forgeage s'effectue un façonnage-pliage du composant à forgeage (16), en particulier un façonnage-pliage par plus de 60° au moins d'une portion du composant à forgeage (16),
où le façonnage-pliage du composant à forgeage (16) s'effectue autour d'un axe de pliage du composant à forgeage (16) qui s'étend au moins sensiblement en parallèle aux axes longitudinaux des bras oscillants (18, 20) du composant à forgeage (16) réalisé comme fourche suspendue,
où dans l'étape de façonnage-forgeage (12, 14) une structure bionique ou une structure à colombage est introduite dans les bras oscillants (18, 20).

2. Procédé de forgeage selon la revendication 1,
**caractérisé en ce que** dans au moins une étape de procédé, en particulier avant le façonnage-pliage, préférablement dans l'étape de façonnage-forgeage (12, 14), une surface (24) du composant à forgeage (16) sur une face intérieure d'un logement de tuyau amortisseur (26) du composant (16) à forgeage, réalisé comme fourche suspendue, est pourvue d'une structure de surface (28) spécifique.

3. Procédé de forgeage selon la revendication 1 ou 2,
**caractérisé en ce que** le façonnage-pliage du composant à forgeage (16) s'effectue autour d'un axe de pliage (32) qui s'étend transversalement, en particulier au moins sensiblement perpendiculairement, à un axe d'action principale de force-forgeage (30).

4. Procédé de forgeage selon l'une des revendications précédentes,
**caractérisé en ce que** dans l'étape de façonnage-forgeage (12, 14) au moins une percée (34) et/ou au moins un renfoncement (36) sont introduits dans une zone porteuse (38) du composant à forgeage (16) et au moins une percée (40) et/ou au moins un renfoncement (42) sont introduits dans une autre zone porteuse (44) du composant à forgeage (16),
où après le façonnage-pliage du composant à forgeage (16), la percée (34) introduite dans la zone porteuse (38) et/ou le renfoncement (36) introduit dans la zone porteuse (38) sont disposés au composant à forgeage (16) opposés à la percée (40) introduite dans l'autre zone porteuse (44) et/ou au renfoncement (42) introduit dans l'autre zone porteuse (44).

5. Procédé de forgeage selon l'une des revendications précédentes,
**caractérisé par** au moins une étape de perforation et/ou d'ébavurage (46) dans laquelle, en particulier après l'étape de façonnage-forgeage (12, 14), le composant à forgeage (16) est perforé et/ou ébavuré, l'étape de perforation et/ou d'ébavurage (46) s'effectuant avant le façonnage-pliage du composant à forgeage (16).

6. Procédé de forgeage selon l'une des revendications précédentes,
**caractérisé par** au moins un traitement thermique (48) du composant à forgeage (16), le façonnage-pliage du composant à forgeage (16) s'effectuant pendant le traitement thermique (48), en particulier après trempage en solution et/ou après trempage à froid, de préférence avant un vieillissement à chaud.

7. Procédé de forgeage selon l'une des revendications précédentes,
**caractérisé en ce que** dans au moins une étape de procédé (50), en particulier avant l'étape de façonnage-forgeage (12, 14), s'effectue un pré-façonnage-pliage d'une pré-ébauche à forgeage (52), en particulier d'un demi-produit, à partir de laquelle le composant à forgeage (16) est forgé, en particulier dans l'étape de façonnage-forgeage (12, 14).

8. Composant à forgeage (16), en particulier composant à forgeage d'alliages à construction légère, produit par le biais d'un procédé de forgeage selon l'une des revendications 1 à 7,
le composant à forgeage (16) étant réalisé comme fourche suspendue qui comprend une portion réalisée comme logement de tuyau amortisseur (26), une zone porteuse (38) et une autre zone porteuse (44), la zone porteuse (38) et l'autre zone porteuse (44) formant des bras oscillants (18, 20) de la fourche suspendue,
**caractérisé en ce que** les bras oscillants (18, 20) ont une structure bionique ou une structure à colombage introduite dans les bras oscillants (18, 20) moyennant le procédé de forgeage.
